(19) Europäisches Patentamt
European Patent Office
Office européen des brevets

(11) **EP 1 884 166 B1**

(12) **EUROPEAN PATENT SPECIFICATION**

(45) Date of publication and mention
of the grant of the patent:
**14.10.2015 Bulletin 2015/42**

(51) Int Cl.:
***A23C 19/082*** (2006.01)   ***A23C 20/00*** (2006.01)

(21) Application number: **06076516.1**

(22) Date of filing: **01.08.2006**

(54) **Soft-solid food product**

Weich-festes Nahrungsmittelprodukt

Produit alimentaire solide-mou

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**06.02.2008 Bulletin 2008/06**

(73) Proprietor: **Friesland Brands B.V.
3818 LE Amersfoort (NL)**

(72) Inventors:
• **Paques, Marcel
  3941 DM Doom (NL)**
• **Jeurissen, Franciscus Johannes Hubertus
  8112 AT Nieuw Heeten (NL)**
• **Verhoeven, Vincent
  9716 ET Groningen (NL)**
• **Schokker, Erik Peter
  6721 BJ Bennekom (NL)**
• **Koning, Anno
  7608 NA Almelo (NL)**

(74) Representative: **Jansen, Cornelis Marinus et al
V.O.
Johan de Wittlaan 7
2517 JR Den Haag (NL)**

(56) References cited:
**EP-A2- 1 123 658     US-A- 5 108 773
US-A- 5 709 900**

**Description**

The invention relates to a method for preparing a food product, in particular a soft-solid food product.

As defined herein, a soft-solid food product is a food product that primarily exhibits elastic deformation (elastic deformation: G'>G") upon applying a stress, and in which a relatively small stress is needed to obtain a substantial deformation, either due to low elastic modulus or small yield stress. Further details on soft-solid food products are described in :P. Walstra (2003) Physical Chemistry of Foods; Chapter 17: Soft-solids; Marcel Dekker, New York, which chapter contains a further description of soft-solid food products. In particular a stress of up to 10 000 Pa is considered a small stress.

A well-known soft-solid food product is cheese. Other soft-solid food products include those exhibiting elastic deformation upon applying a stress similar to a stress needed to elastically deform a cheese.

Traditionally, cheese making is a process wherein milk ingredients are concentrated in order to preserve the ingredients for a long, or at least a prolonged period of time. At present, various cheeses, cheese analogues and cheese-related specialties are known, which differ in their composition from natural cheeses.

Natural cheeses are defined herein as cheeses made directly from milk. The CODEX GENERAL STANDARD FOR CHEESE (CODEX STAN A-6-1978, Rev.1-1999, Amended 2003) provides the following definition: cheese is the ripened or un-ripened soft or semi-hard, hard and extra hard product, which may be coated, and in which the whey protein/casein ratio does not exceed that of milk, obtained by: (a) coagulating wholly or partly the following raw materials: milk and/or products obtained from milk, through the action of rennet or other suitable coagulating agents, and by partially draining the whey resulting from such coagulation; and/or (b) processing techniques involving coagulation of milk and/or products obtained from milk which give an end-product with similar physical, chemical and organoleptic characteristics as the product defined under (a). It is noted that such cheeses generally meet the above definition of a soft-solid food product (i.e. not only a soft cheese, but also semi-hard, hard or extra hard cheese is generally a soft-solid food product).

Cheese products or cheese-analogue products may be made by (partially) replacing traditional raw materials (in particular milk) for other raw materials, such as different protein sources or fat substitutes.

The motivation for the use of non-dairy proteins, e.g. vegetable proteins, is to obtain a cheaper high protein food than natural cheese. Examples of documents illustrating the use of non-dairy proteins are: US-A-2004/0018292 (soy protein concentrates and isolates applied in process cheese products), and US-B-6,495,187 (soy protein isolates in fresh unripened cheese analogues and cheese analogues).

The use of fat substitutes, e.g. polysaccharides, is mainly a way to yield a low fat cheese product.

Commonly, the preparation of processed cheese products with non-traditional additives such as alternative proteins and/or fat substitutes involves making a blend of a dairy material and the other raw materials. Examples of methods for preparing such products are described in EP 1 123 658 A2 and US-B-6,322,841.

A non-fat cream cheese type product having the appearance, taste and consistency of fat-containing cream cheese is provided in U.S. Patent 5,079,024. Concentrated skim milk is heated together with an emulsifier salt. The resulting mixture is transferred to a second agitating mixer, then combined with a gum to provide a thickened skim milk. After homogenization, the resulting mixture is transferred to a third agitating mixer, and a suitable bulking agent and an additional gum are added while heating with agitation. The mixture is then homogenized again to provide the cream cheese product. The manufacture of this cream cheese product requires both an emulsifier salt and a bulking agent, as well as a complex process, including multiple heating, agitation, and homogenization steps.

Conventional methods to make processed cheese products involve process steps such as intimate mixing and homogenizing with the aim to achieve a homogeneous blend and a homogeneous product structure. This degree of homogeneity is thought to be necessary to obtain a product behaviour similar to that of natural cheese as it is assumed that the structure of natural cheeses is homogeneous. This aim for optimal maximum mixing in order to obtain homogeneous structures is common in the art. E.g. US 5,103,773 describes the manufacture of a non-fat cream-cheese product, wherein a slurry of microcrystalline and skim-milk in prepared, which slurry is sheared in a high shear zone. However, the present inventors have realised that this aim is a shortcoming caused by lack in insight in the structure of cheese.

Based upon new insights, the present inventors have found that it is possible to prepare a soft-solid food product, such as a cheese product, which may be shaped, or cheese analogue product, which may be shaped, with a good mouth feel and mouth sensation, in particular a mouth feel and sensation similar to a traditionally produced cheese.

The inventors have discovered that inhomogeneities in the structure of natural cheese, especially inhomogeneities in the spatial distribution of the dispersed phase, are responsible for the desired in-mouth sensory behaviour.

Natural cheese, manufactured from non-homogenized milk, can be considered as a soft-solid multi-phase food product consisting of an aqueous para-casein phase and a dispersed fat phase.

The inventors have realised that in natural cheeses such as in semi-hard Gouda type cheeses, in particular those containing about 48 weight % fat or more in dry matter, the fat droplets (2 - 8 micron in diameter) show a characteristic inhomogeneous spatial distribution, typically providing chain-like arrangements, over the continuous hydrophilic casein matrix. The indication used below for a product comprising about 48wt.% fat is "48+". In general, "x+" means that the percentage of fat is about x wt. %. For instance 30+ and 20+ cheese have about 30 or 20 weight % fat or more in dry matter, respectively).

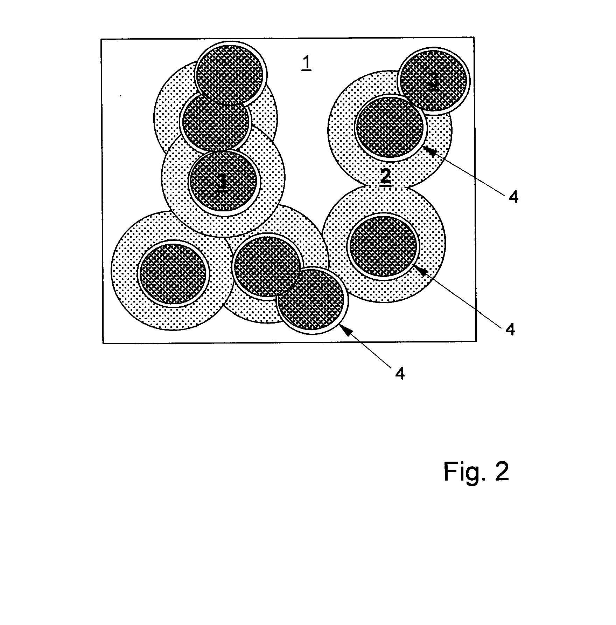

Figure 2 schematically shows the structure of a traditionally prepared Gouda cheese. Sections 1 and 2 form the matrix wherein section 1 is more hydrophobic and has a lower water/ionic content than section 2. Section 1 also has stiffer mechanical properties than section 2. The fat globules 3 have weaker mechanical properties than sections 1 and 2 of the matrix. The ring-like area around globules 3 represent a capillary space between the fat globule and the protein matrix. Generally, fat globules are not tightly surrounded by the matrix. It has been found that this capillary space plays an important role in the uptake of saliva by the product when chewed. As a result of the high degree of connectivity of the fat globules, the individual capillary spaces are also interconnected. This is considered to be a reason why saliva can penetrate into the cheese (or a soft-solid food according to the invention) much quicker than in homogenised soft-solid food products. The diffusion of saliva into the protein matrix may also be improved. Hereby the protein matrix swells, mechanically destabilises, which facilitates the disintegration of the food during oral processing.

The heterogeneity of such bi-continuous structure can be described as a spatial arrangement of protein rich, and especially casein rich domains separated by enclosing fat connective areas. In Gouda cheese and the like, the casein domains have a typical length scale of 30 - 100 micrometers. The fat phase is comprised of globules still containing their fat globular membrane preventing direct interactions between the continuous protein phase and the oil content of the fat globules. The fat globular membrane acts as spacer and can be considered as an interruption in the matrix structure. Due to the history of structure development of the cheese during manufacturing and storage/ripening these connective fat areas play a crucial role in the structure disintegration during oral processing. During consumption, the solid piece of cheese shows a preference to fall apart along these connective fat areas and converts into a dispersion of fragments in the saliva. The fragments consist of the casein rich domains enclosed by and exposing the fat phase. This typical fracture behaviour also facilitates the release of the flavours that have their highest concentrations in these fat rich areas. This conversion into fragments gives rise to the characteristic, malleable, creamy attributes appreciated by the consumers, and is considered as a main quality attribute.

The connectivity in the fat phase can be revealed using a non-invasive imaging technique allowing visualization of the three-dimensional structure of the material with sufficient spatial resolution. The characteristic fracture behaviour of Gouda type cheeses, containing 48 weight % fat in dry matter, along the fat connective areas can be described by double compression measurements and using the triple-point geometry in fracture measurements. Suitable ways to carry this out are, e.g., described in J.F.C. Meullenet, J.Gross (1999) Instrumental single and double compression tests to predict sensory texture characteristics of foods, Journal of Texture Studies 30, 167-180 and in IDF Bulletin: Rheological and Fracture properties of cheese (chapter 3), No 268/1991.

Imaging techniques applied to these freshly created fracture surfaces can prove the preferential fracture of the material through the fat connective phases and domains rich in fat globules. The fracture surfaces contain more fat globules than one might expect from the fat/protein volume ratio indicating preferential fracture through fat rich domains.

It has been found possible, and this is an important aspect of the present invention, to make improved effective use of the fat phase by inhomogeneously distributing the fat phase in the product. This allows to preparation of e.g. a processed cheese or cheese-like product, which resembles at least to an extent the spatial distribution of the fat phase in a natural cheese.

Accordingly, the present invention relates to a method for preparing a food product, in particular a soft-solid dairy food product such as a cheese product or a cheese analogue product comprising

- providing a mixture comprising an oil in water emulsion and a gel, said gel comprising a protein, preferably a dairy protein;
- fragmenting the gel;
- regenerating the gel; and
- shaping a product from the mixture, wherein the product comprises a gel phase comprising the (dairy) protein, said gel phase having a relatively low fat content, and inhomogeneously distributed outside the gel phase a plurality of fat globules formed from the oil in water emulsion, said globules forming a phase having a relatively high fat content.

Figure 1 schematically shows the "exclusion principle" which may be used in order to prepare a product in accordance with the invention.

Figure 2 schematically shows the connectivity of fat globules in a product of the invention.

Figure 3 shows a curve representing the amount of extractable fat as a function of total fat in natural cheeses.

Figure 4 shows the relation between extractable fat and the mean number of globules per string in natural cheeses.

Figure 5 shows the intercept length vs. the number of fat globules in several cheeses.

Figure 6, the total intercept length distributions of natural Gouda cheeses of 30+ and 48+ and a 20+ soft-solid multi-phase food product of the invention (20*), relative to a natural Gouda cheese of 20+ (horizontal line).

Figure 7 shows a characteristic connectivity of fat globules visualised by an analysis using a non-invasive imaging technique.

Figure 8 shows a PCA plot comparing sensory performance of a product of the invention and known products.

The invention further relates to a method for altering the sensory performance of a food product which method comprises inhomogeneously distributing fat globules in the food product. The performance may in particular be altered with respect to one or more of the following attributes:

- "cheese oral texture", i.e. the similarity to yellow cheese in the mouth of the product;
- "crumbliness": the amount of particles, without taking crystals into account (crumbliness may be divided in "direct crumbliness": i.e. after chewing briefly and "later crumbliness", i.e. just before swallowing);
- "fatty oral texture": an indication of how fatty the oral texture is perceived
- "firmness": a measure for how the product feels when biting through (a product being more firm the higher resistance when biting through);
- "meltability": ease with which the product solves/falls apart in the mouth;
- "rubberiness:": the extent to which the product has a rubber-like oral texture during chewing;
- "stickiness": the extent to which the product tends to stick to palate and teeth;
- "creamy mouthfeel" .

In addition or alternatively one or more other attributes may be altered, in particular one ore more attributes selected from elasticity, hardness, dryness, graininess, smoothness, remainings, fracturability and fatty impression.

Elasticity is a manual attribute, indicating the degree of return to original size/shape after compression/release between thump and finger.

With respect to hardness, in particular the mouthfeel hardness., i.e. the hardness perceived in the mouth (from soft to hard, may be altered.

With respect to dryness, in particular the (afterfeel) dryness perceived in the mouth after swallowing, such as thirsty sensation after swallowing, may be altered.

With respect to graininess, in particular the mouthfeel graininess, i.e. the perception of particles in the mouth may be altered.

With respect to smoothness, in particular the mouthfeel smoothness, i.e. smooth texture perceived in the mouth may be improved.

Fatty impression is a manual attribute, relating to the presence of a coating on fingertips after sweeping a sample's surface 3 times.

Remainings is related to the after-feel the product leaves in the mouth, after swallowing the product.

Fracturability is an attribute regarding how fast a product breaks after the appearance of a first tear in the product, when held in both hands and bent.

The sensory performance may be assessed by trained sensory panels (QDA panels), which are capable of determining an attribute as described above.

The attribute's alteration may be perceived statically (at a specific moment in time) and/or dynamically (intensity over time).

The attribute's alteration may be perceived statically (at a specific moment in time) and/or dynamically (intensity over time).

In principle, any food product, wherein fat globules can be distributed inhomogeneously, may be prepared in accordance with the invention.

In principle, the food product may be a solid product or a pourable product (such as a thick viscous liquid, e.g. liquid yoghurt, "vla" -a custard-like dessert, popular in the Netherlands - or a product having a similar viscosity).

The food product may a pourable product, preferably a thick viscous liquid. A product is considered pourable if it can be poured from a filled package, when held diagonally and the outflow opening is held downward. In particular, a product is considered a thick viscous liquid if the viscosity, as measured with a Brookfield viscometer (spindel 5, 10 rpm, 7°C), is 10 to 70 Pa.s, in particular at least 15 Pa.s, preferably at least 30 Pa.s.

Preferred pourable products in particular include liquid yoghurt., liquid yoghurt-based products, custard, "vla" (Dutch), a custard-like dessert popular in the Netherlands which is available in a range of different tastes, e.g. in vanilla, chocolate, caramel and in various fruit flavours, or a product having a similar viscosity to any one of these.

The product may be spoonable, which means that the product can easily be spooned from a plate or a bowl. A spoonable product may be a pourable product or a non-pourable (slightly) gelled product, usually with a short texture. In particular, examples of spoonable products, in addition to the above mentioned pourable products are mousses and creams, in particular sour cream, whipped cream, ice-cream, and soft curd cheese.

The soft-solid food product may in particular be a product exhibiting elastic deformation upon applying a stress similar to a stress needed to elastically deform a cheese.

Preferred soft-solid food products include processed cheese products and cheese-analogue products.

Other preferred soft-solid products of which a sensory property may be altered in particular include set yoghurts, set desserts, cottage/cream cheeses, (dairy) bars, (dairy) snacks, sauces, pastes and sausages.

Typically, the food product is a food product other than naturally prepared cheese. However, it may resemble a natural cheese, in particular with respect to the texture, mouthfeel and/or taste. In an embodiment, the food product does not substantially ripen during storage, or at least less than a natural product of the same chemical composition.

If desired, the invention may be used to create a texture which resembles the texture of a natural product -in particular a natural cheese - of a specific age, as a result of the production process, comprising creating an inhomogeneous distribution of the fat globules, resembling a product that has the specific age. Thus, e.g., a product having a texture of a mature or old product (such as mature or old cheese) can be obtained without needing to store (ripen) the product, or at least achieving such texture within a reduced ripening time.

The shaping may in particular comprise extruding the mixture. The product may be directly shaped when leaving extruder into the final shape of the end-product. It is also possible to extrude the mixture and bring it into a mould.

The invention further relates to a food product - in particular a soft-solid dairy food product, such as a (processed) cheese or (processed) cheese analogue product - obtainable by a method according to the invention.

The invention further relates to a food product - in particular a (processed) soft-solid dairy food product, such as a (processed) cheese or (processed) cheese analogue product -comprising a gel phase comprising a protein, and inhomogeneously distributed outside the gel phase a fat phase formed by a plurality of fat globules, wherein the fat globules are spatially inhomogeneously distributed, as determinable by determining the intercept length profile of the fat phase.

The gelled protein phase can usually be regarded as a conglomerate of gelled protein domains (conglomerated particles/fragments) that are interconnected. In particular, the gelled protein phase may usually be regarded as a substantially continuous phase, wherein the fat phase is dispersed.

For a desirable inhomogeneity of the product, at the average size of these domains should at least be about 20 $\mu$m, as determined by the intercept length method, discussed in more detail below. A preferred upper limit for the size depends on the mechanical properties of the gelled protein. The upper limit can suitably be determined by a QDA panel (QDA= qualitative descriptive analysis).

The size of the gel domains, the viscosity of the gel phase and the deformability of the gel domains play a role in the mouthfeel. In general, the mouthfeel is experienced as smoother when the size of the domains is decreased, the viscosity is increased and/or the deformability is increased.

For a smooth mouth-feel, at least the majority of the domains preferably have a size of 500 $\mu$m or less, more preferably 300 $\mu$m or less, even more preferably 150 $\mu$m or less.

The invention aims to allow the manufacture of low fat products that provide full fat performance. In particular, the invention provides a method to prepare a processed (shaped) cheese or cheese analogue product having a desirable mouth sensation, also, or better; even, at a relatively low fat content.

The inventions also allows the use of health beneficial ingredients e.g. vegetable unsaturated oils.

The invention further offers one or more processing advantages. Due to the possibility to use low cost ingredients and to the fact that a product according to the invention can be prepared without a maturation step and/or a brining step, which steps are time consuming, a method according to the invention is simplified and costs can be saved compared to natural cheese making.

In addition, a method of the invention is highly flexible and allows good tuning of manufacturing volumes to market requirements, without needing large storage capacity.

In particular, textural properties and/or flavour properties can be fine-tuned independently from each other, in a method according to the invention. This is an advantage over naturally prepared products. Thus, it has been found possible to provide a product with a textural appearance of a relatively young product (such as young cheese) and a flavour appearance of a relatively mature product (such as old cheese), or vice versa.

The term "fat" is generally used herein as a generic term for carboxylate esters of glycerine (glycerides); in particular triglycerides are fats. The term "fat" includes compounds that are solid and compounds that are liquid at room temperature.

The term "oil" is used to describe that the fat is liquid. For instance, the oil in the oil in water emulsion comprises one or more fats which form a liquid phase at the processing temperature during at least part of the method. In the final product (at room temperature), the oil may have partially or fully solidified. Preferably, the fat globules comprise one or more fats that are liquid at the temperature in the oral cavity of a human (about 35-37°C).

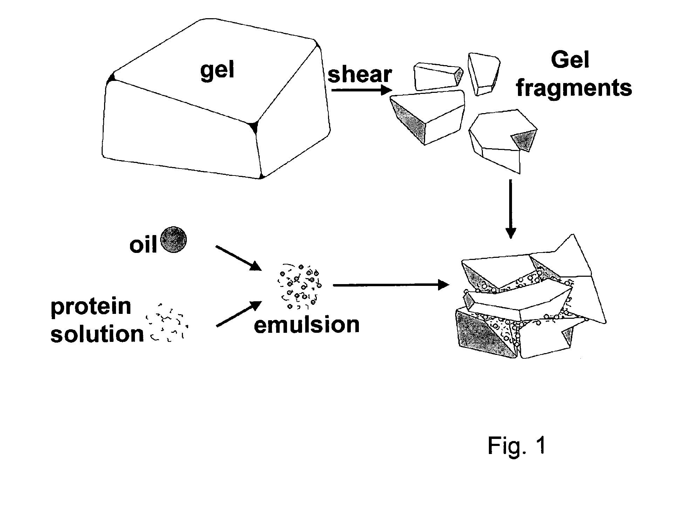

In accordance with the present invention use may be made of the "exclusion principle". A preferred example thereof is schematically shown in Figure 1. In accordance with this principle a gel may be made comprising water and a protein (which typically acts as a gellator), in particular or preferably a milk protein.

After the gel has been made, the gel is mixed with an oil in water emulsion. The gel may be made in the form of gel particles or the gel may be fragmented after formation to create gel particles. In the course of processing (shaping; aging) the particles/fragments are allowed to become interconnected, which may be accomplished by aging.

By mixing the emulsion with the gel after the gel has formed, the oil phase is kept substantially out of the gel phase. Thus the gel particles impose a heterogeneous spatial distribution of the emulsion enclosing and separating the gel particles, and excluding the presence of fat globules at the locations of the gel particles self ("exclusion principle"). It should be noted that the fragmenting of the gel may take place prior and/or during mixing with the emulsion. Further, it is in principle possible to mix gel (particles), oil phase and water phase simultaneously, thereby forming the emulsion during the mixing with the gel.

Preferably, one or more other ingredients, such as one or more flavours and/or aromas, are premixed with the emulsion prior to mixing with the gel, to obtain compartmentalization of these ingredients in the fat-rich domains. During oral processing, these compartments are exposed facilitating the proper release of the ingredients. This design provides a fracture behaviour, through the fat containing domains, and oral performance comparable to natural full fat cheeses may thereby be achievable.

The exclusion principle further allows the full or partial replacement of the protein (casein) matrix in, for instance, the cheese or cheese analogue product. Thereby a considerable reduction of the fat content can be realised. Still a product may be prepared that is capable of providing a sensory appreciation
- in particular a good mouth sensation such as good taste and/or mouthfeel - that is comparable to a natural cheese product.

In accordance with the invention, it is contemplated that the engineered structure provides effective use of a large portion, and possibly essentially all, fat present in the product through maximal exposure of the fat for sensory perception.

The fat content may be chosen within wide limits. Usually, the fat content in the food product is at least 0.5 wt. % based upon dry weight. Usually the fat content is up to 60 wt.% based upon dry weight. Thus, the invention may suitably be employed to prepare a product with an engineered structure having a creamy performance, similar to 48+ Gouda type, but generally having a lower fat content. If desired, a cheese or analogue product with a creamy performance similar to Gouda (like) cheese having a different fat content (such as a 30+ cheese, a 20+ cheese, or a 10+ cheese) can be obtained.

The determination of the presence of spatially inhomogeneously distributed fat globules will now be discussed, exemplified by making use of a shaped product according to the invention, prepared while making use of protein gel of casein or skimmed milk powder and a dairy product (in particular a dairy cream) as the oil in water emulsion in comparison with traditionally prepared Gouda-type cheeses and low-fat varieties thereof as comparator.

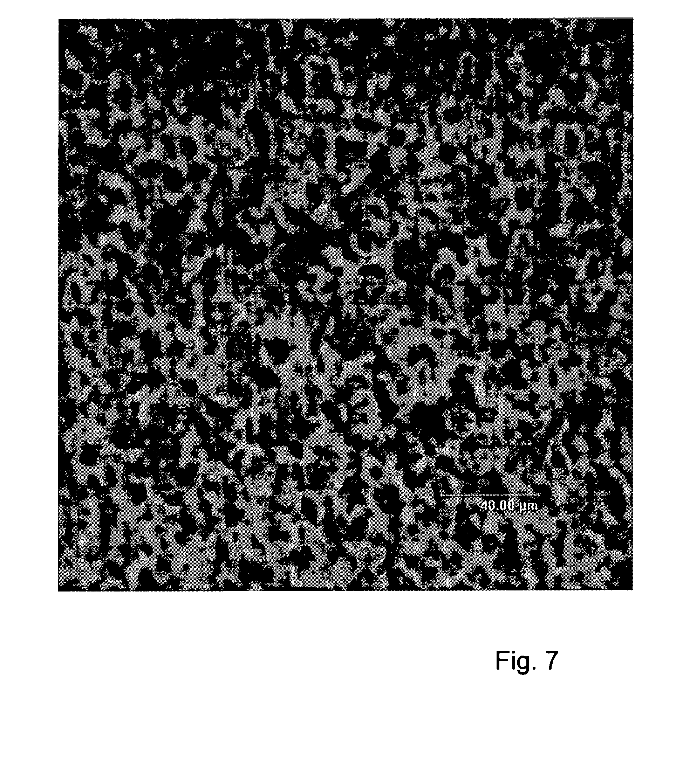

The characteristic connectivity of fat globules (see also Figure 2) may be visualised by an analysis using a non-invasive imaging technique such as confocal scanning laser microscopy (see Figure 7).

In a product according to the invention, the percentage of extractable fat is higher than in a product wherein the fat is homogenously distributed, and usually also higher than in a comparable naturally prepared cheese (based on the same ingredients in the same amounts). The percentage of extractable fat can be determined by the Soxhlet extraction according Weibull in combination with a modified version of the Weibull method (methods IDF 126A (1988) Milk products and milk-based foods (special cases), Determination of fat content Weibull-Bentrop gravimetrix method.)

In the modified version of the Weibull method, the protein degradation is omitted. The Weibull method allows the total fat extraction. The modified version allows the extraction of fat in the connective fat phase only and in connection with the outer-surface of the cheese. The percentage of extractable fat according to the modified method is a measure for the degree of fat exposure for sensory perception. The connective (fat/matrix) interfaces are one of the underlying structural features. The larger the connectivity is the more fat will be extracted.

Table 1 shows the amount of total fat (Weibull) and extractable fat as a percentage of the total fat (Weibull modified) for some naturally prepared Gouda cheeses and low fat variants thereof.

**Table 1**

| Sample | total fat content (weight % of total) | extractable fat (weight % of total fat) |
|---|---|---|
| 48+, 4 weeks | 29.8 | 90.7 |
| 48+, 7 months | 32.6 | 95.2 |
| 30+, 4 weeks | 18.4 | 24.4 |
| 30+, 4 months | 17.7 | 29.8 |
| 20+ 4 weeks | 11.7 | 11.8 |

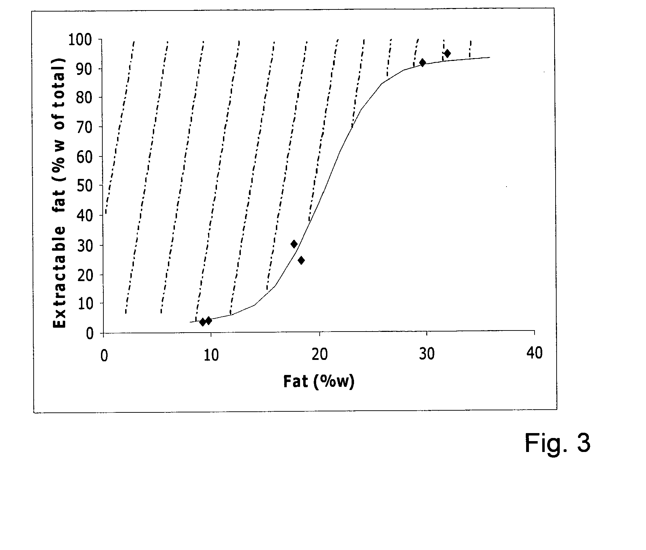

Figure 3 shows a curve representing the fraction of extractable fat as a function of total fat in these cheeses.

The values on the x-axis (total fat) are values in volume percentages, obtained by image analysis. The values on the y-axis (extractable fat) are weight percentages, obtained by chemical analysis.

A product according to the invention typically has a higher extractable fat percentage than a comparable naturally prepared product.

In particular, the value for a Gouda-like cheese product according to the invention would typically have an extractable fat content in the hatched area of Figure 3. For instance, a cheese product according to the invention having the same composition (same amount of protein (casein), fat, water) as a naturally prepared 20+ cheese, has a substantially higher amount of extractable fat. In contrast, a conventionally prepared shaped cheese product with a homogenous fat globule distribution will display a lower percentage of extractable fat.

For a product according to the invention, in particular for a cheese or cheese like product, more in particular for a Gouda-like cheese product according to the invention the relationship between the total fat content of the product (TL) and the fraction of the total fats extractable by the modified Weibull method (EL) without protein degradation is preferably such that the amount of extractable fat as a percentage of the total fat content of the product is higher than for a comparable natural product (cheese), i.e. a product having the same composition (in particular having the same total fat content and the same protein content) and preferably the same age. More preferably, the extractable fat percentage is at least 1 percentile point higher.

Thus, for a product according to the invention, in particular a Gouda-like cheese product, the following values preferably apply.

**Table 2**

| Sample | preferred minimum extractable fat (weight % of total fat) | more preferred minimum extractable fat (weight % of total fat) |
|---|---|---|
| 48* 4 weeks | 91.0 | 92.0 |
| 48* 7 months | 96.0 | 97.0 |
| 30* 4 weeks | 25.0 | 26.0 |
| 30* 4 months | 30.0 | 31.0 |
| 20* 4 weeks | 12.0 | 13.0 |
| * marks product of the invention; the age referred to is the apparent age, *i.e.* referring to the age of a natural cheese the product resembles (even though it has not been ripened for such a long period) | | |

The skilled person will be able to routinely determine extractable fat percentages for different products, having a different fat content and/or age and prepare a product according to the invention having a higher extractable fat content than a comparable natural product (cheese) based upon the present description and claims.

A preferred product, in particular a Gouda-like cheese product, according to the invention has an extractable fat content that can be described by the following function:

$$EL > A + 45*TANH(0.2*(TL-20.5)) \quad (\%)$$

wherein A is 48, 49, or 50.

The dissector method is also of use to determine the inhomogeneity of a product according to the invention is. This is a stereology based Image Analysis approach (John C Russ, Robert T. Dehoff, Practical Stereology, second edition, ISMN 0-306-46476-4, Kluwer Academic/Plenum Publishers, which publication describes the said method).

The dissector method allows the determination of the degree of connectivity in the fat phase. It provides a relative number (of fat globules) indicating this connective length, as shown in Table 3.

**Table 3**

| Type of Gouda cheese | Mean number of globules per string |
|---|---|
| 48+, 4 weeks | 11.80 |
| 48+, 7 months | 14.10 |
| 30+, 4 weeks | 6.71 |
| 30+, 4 months | 7.88 |
| 20+, 4 weeks | 4.80 |

As the product ripens, the connectivity in the fat phase increases. The higher the fat content the stronger, this effect.

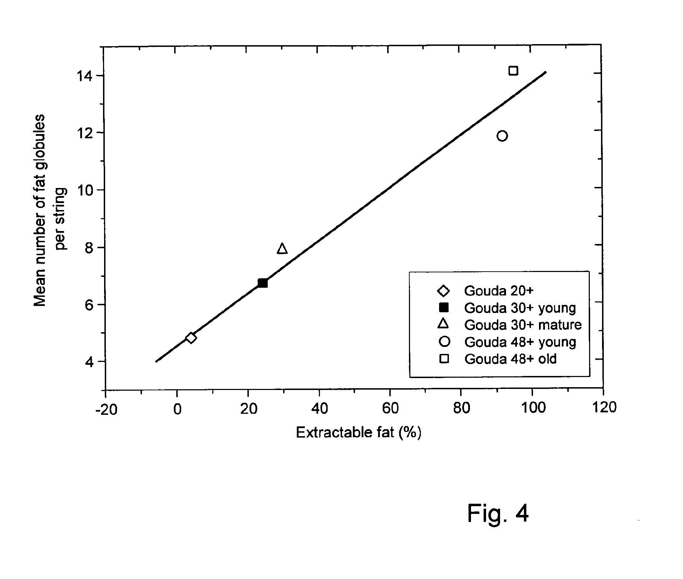

Figure 4 shows the relation between extractable fat and the mean number of globules per string. The fat compartments between the gel particles can be seen as a string of fat globule beads. A product according to the invention has a higher mean number of fat globules per string than a naturally prepared product (for instance natural cheese) having the same amount of protein, fat and water, especially of such a product of the same age. Preferably, the mean number of fat globules per string is at least 0.5 higher.

In contrast, a conventionally prepared shaped cheese product with a homogenous fat globule distribution typically displays a lower mean number of fat globules per string than a naturally prepared cheese having the same amount of protein, fat and water.

In a product according to the invention, in particular for a Gouda-like cheese, the mean number of globules per string is preferably as indicated in Table 4.

**Table 4**

| total fat content (wt % of total): | preferred type of product | preferred min. mean number of globules per string | more preferred min. mean number of globules per string |
|---|---|---|---|
| 30 | 48*, 4 weeks | 12.0 | 12.3 |
| 33 | 48*, 7 months | 14.3 | 14.6 |
| 18 | 30*, 4 weeks | 7.0 | 7.2 |
| 18 | 30*, 4 months | 8.0 | 8.4 |
| 12 | 20* 4 weeks | 5.0 | 5.3 |
| * marks product of the invention; the age referred to is the apparent age, i.e. referring to the age of a natural cheese the product resembles (even though it has not been ripened for such a long period) | | | |

In an embodiment, in particular for a Gouda-like cheese product according to the invention, the relationship between the mean number of fat globules per string of the product (LGS) and the fraction of fat extractable by the modified Weibull method (EL) may be described by the following function:

$$LGS > 0.0887*EL + 4.643 \text{ or } LGS > 0.0887*EL + 4.8$$

A measure for the typical minimal size for effective inhomogeneities is provided by the Intercept Length method (John C Russ, Robert T. Dehoff, Practical Stereology, second edition, ISMN 0-306-46476-4, Kluwer Academic/Plenum Publishers). This method is particularly suitable to characterise a product according to the invention. The principle of this method is as follows: a screen of parallel lines is transposed on a microscopic picture of the product. Along the lines the distance between subsequent fat globules (the intercept lengths) is determined and counted.

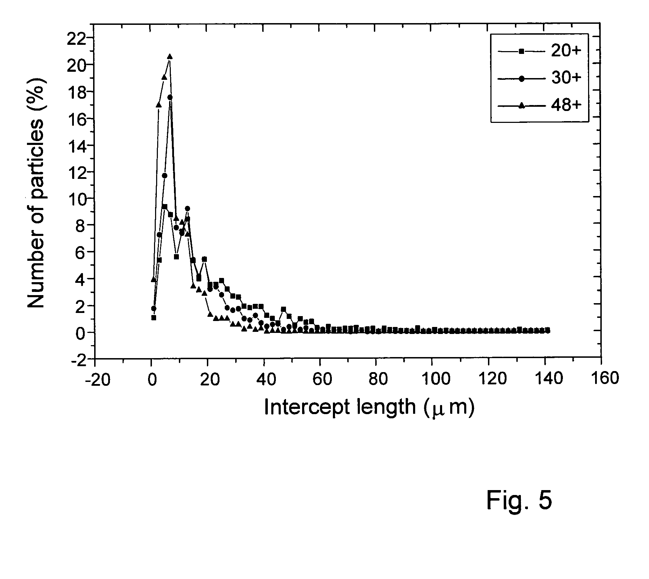

Figure 5 shows the intercept length vs. the number of fat globules. In Figure 5, the abundance of different intercept lengths is graphically shown for three natural cheeses. It can be seen that the distribution of intercepts is rather broad for a 20+ cheese, compared to a 30+ and a 48+ cheese. The latter two have a much more pronounced peak in abundance at an intercept length of about 10 μm. This is an indication that 20+ cheese is more homogenous than 30+ cheese and 48+ cheese. In general, it is concluded that low-fat natural cheeses are more homogenous than high-fat natural cheeses.

The abundance of the various intercept lengths can be compared with a comparative product (such as an essentially homogenous product).

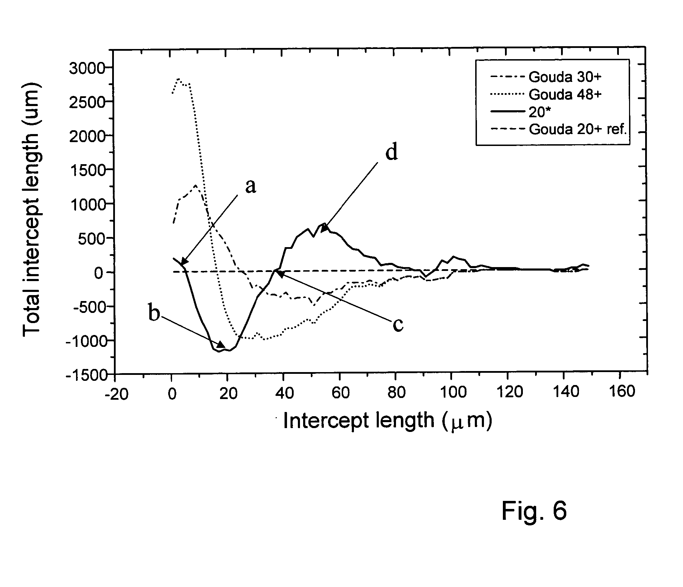

In Figure 6, the total intercept length distributions of natural Gouda cheeses of 30+ and 48+ and a 20+ soft-solid multi-phase food product with the designed inhomogeneous structure (20*), are compared with a natural Gouda cheese of 20+ (horizontal line). A graphical representation as shown in Figure 6 is suitable to visualise a difference in fat globule distribution of a product according to the invention compared to a more homogenous product (like natural 20+ cheese or homogenous processed cheese-like products known in the art) and compared to inhomogeneous natural cheese products (such as 30+ or 48+ Gouda-cheese). The comparative product is represented by the horizontal line.

Compared to a relatively homogenous conventional product of essentially the same composition (in particular having the same fat, protein and water content), a product according to the invention is characterised by having an increased number of small intercept lengths, in particular for a cheese, preferably an increased number of intercept lengths with a value of 0 to about 5 $\mu$m (section a in Figure 6). The increase in such intercept lengths can be understood from the fact that the presence of gelled protein domains (essentially free of fat globules) in a product according to the invention forces the fat globules in a relatively small volume. In this volume, the fat globules are relatively close to each other, resulting in an increased number of small intercept lengths, compared to a homogenous processed product or naturally prepared cheese having the same fat, protein and water content.

A product according to the invention further typically has an increased abundance of intercept lengths of a relatively large size (section d in Figure 6), compared to a homogenous product and/or compared to a naturally prepared inhomogeneous product (such as 30+ or 48+ cheese). This is the result of the presence of relatively large gelled protein domains, which are usually essentially free of fat globules. The dimensions of the gelled protein domains determine the lower limit at which intercept length the abundancy of intercept lengths is increased. This limit is represented by the intersection between the product of the invention and the comparative product (intersection point c in Figure 6). This point is a measure for the length-scale of the inhomogeneities. The higher the intersection c is, the more inhomogeneous the product is. The value of intersection c depends upon the exact nature of the product and may be fine-tuned by selecting gelling conditions, shearing of the gel and the like. Generally, the intersection c will have a value of at least 30 $\mu$m, preferably of at least 40 $\mu$m, in particular order to realise a desirable level of inhomogeneity that contributes to an advantageous structure disintegration during oral processing.

If the inhomogeneities in length scale go beyond this threshold the viscosity of the matrix during oral processing allows resolving the undesired non-smooth character of the (virtual) fat free domains which is responsible for the drop in sensorial performance. The upper threshold found is typically of length scales of 300 microns and more. Engelen found for crystalline particles an upper limit at 150 microns. This lower limit is due to the non-deformable character of crystalline particles (Thesis Lina Engelen, Wageningen University, 2004, chapter 4: Oral size perception of particles: effect of size, type, viscosity and method).

The upper limit for the section d (section with increased number of intercept lengths), also referred to as the upper limit for the length scale of inhomogeneities, depends on the type of product. A suitable upper limit is determined by the desired sensory performance.

Usually, the abundance of intercept lengths in a product according to the invention (such as a cheese product or cheese-like product) is increased up to a value of 500 $\mu$m or less, in particular up to 300 $\mu$m or less, more in particular up to 200 $\mu$m or less. For a particularly smooth mouthfeel, the upper limit for increased intercept lengths is preferably 150 $\mu$m or less, in particular if the viscosity of the gel phase is relatively low and/or the deformability of the gel-domains is relatively low.

In practice, this means that usually essentially all gelled protein domains usually have a size of up to 500 $\mu$m (in at least one dimension). For a pleasant mouth feel it is preferred that the size (in at least one dimension) of the gelled protein domains is 300 $\mu$m or less. In particular it is preferred that at least the majority of the gelled protein domains has a size (in at least one dimension) of 150 $\mu$m or less.

As a consequence of the high number of both relatively small intercept lengths and relatively large intercept lengths, the number of intercept lengths of intermediate size (section b in figure 6) is decreased compared to a more homogenous product.

Taking the above into consideration, in an embodiment a product of the invention is characterised by having an increased number of relatively small intercept lengths (for instance less than about 5 $\mu$m, in a 20* cheese product), a decreased number of medium sized intercept lengths (for instance of about 20 $\mu$m, in a 20* cheese product), and an increased number of relatively long intercept lengths (for instance of more than about 40 $\mu$m, in a 20* cheese product), compared to a naturally prepared cheese having the same quantitative and qualitative chemical composition (same amount of water, same fat and same protein in the same concentration) .

Besides techniques to determine inhomogeneity, rheological measurements (double compression, fracture behaviour in triple-point geometry) may be used to compare the mechanical properties of a cheese (analogue) product according to the invention with a naturally prepared cheese or a homogeneous shaped cheese (analogue) product. Further evaluation by trained sensory panels may be used to demonstrate that a product according to the invention shows similar behaviour as known from natural cheeses. Such methods are generally known in the art.

Above, a suitable method for preparing a product according to the invention has already been described in general terms. Suitable embodiments will now be discussed in more detail.

The gelled protein may be prepared in any way suitable for the specific protein that is acceptable for a foodgrade product. Suitable proteins in particular include milk proteins (caseins and whey proteins), especially caseins and whey proteins from cow milk.

In a preferred embodiment the gel comprises casein (which may be wholly or partially in the form of a caseinate). A mixture of proteins may be used.

The use of one ore more ingredients selected from the group consisting of skimmed milk powder, sodium caseinates, whey protein concentrates (WPC powder), whey permeates, (modified) starch (corn, tapioca, potato, rice, wheat, or mixtures thereof), and gums such as microbial gums (gellan gum), ionically neutral gums (*e.g.* konjac), anionic gums (*e.g.* carrageenan, agar, alginate) to prepare the gel is particularly preferred. Concentrated skim milk may also be used.

It is an advantage over naturally prepared cheese that in accordance with the invention, whey protein can be used as a protein source to provide the protein matrix. In natural cheese making, the inability of whey proteins to be retained in the coagulum is an important factor contributing to a lack of efficiency in production of cheese curds, and to a reduction in overall yield relating to the incorporation of all the protein solids that are present in the starting dairy liquids into resulting cheese curds.

It is noted that in conventional processes subsequent processing may be utilized to recover useful components such as whey protein from the byproduct whey, the whey produced in conventional cheese making nevertheless represents a significant environmental disposal issue.

In addition to protein (and water) one or more other ingredients may be present in the gel, such as at least one ingredient selected from fillers and pH-adjusting agents.

Preferred fillers include polysaccharides, in particular polysaccharides selected from the group consisting of starches, agar and gellan. Polysaccharides are preferred in view of their good water binding capacity and/or their positive contribution to the mechanical properties of the product.

Preferred pH adjusting agent are *inter alia* phosphates.

If present, the concentration of fat in the protein gel is usually less than 48+, preferably less than 30+, even more preferably less than 20+ or 10+. The gel is preferably essentially free of fat.

The gel may be formed as particles or as a monolithic structure which structure is fragmented as part of the method of the invention. Suitable ways of forming particles directly or by fragmentation are known in the art. Suitable fragmentation techniques include shearing and grating. Usually particles are provided with a size to provide gelled protein domains with a size as described above.

The oil in water emulsion may be provided by mixing a suitable fat above its melting point (or melt range in case of a mixture) with water or an aqueous solution, in the presence of a suitable emulsifier, such as cream serum powder containing the natural composition of the fat globular membrane. The emulsion may comprise one or more additives, in particular one or more additives selected from the group consisting of flavours, additional nutritional ingredients, ingredients for benefiting health, and colorants (e.g. anatto). The colorant can also be added to the pre-gel mixture (see below). By adding one or more appropriate flavourings and/or colorants the desired taste and/or appearance can be obtained.

The content of emulsifier, in particular protein, in the emulsion is preferably comparable to a concentration characteristic for dairy cream.

The oil in water emulsion is preferably selected from oil in water emulsions other than cheese milk, in particular other than full fat milk.

Suitable fats include vegetable fats and animal fats. Preferred animal fats include in particular milk fat, especially cow milk fat. Preferred vegetable fats include sunflower fat, soybean fat, rapeseed fat, corn/maize fat and mixtures thereof. Preferably a fat is used with an increased ratio polyunsaturated fat to saturated fat (pufa/safa) compared to dairy fat, and optional blends. In a preferred embodiment the emulsion is a dairy cream, especially a cream made from cow milk.

The fat content in the emulsion is preferably in the range of 35 to 44 wt. % based on the weight of the emulsion.

The ratio fat to protein gel phase is preferably chosen such that a product is obtained with a fat content in the range of 5+ to 48+, more preferably 5+ to 30+, even more preferably 5+ to 20+ or 5+ to 10+.

In a preferred embodiment, use is made of an extruder. The gelled protein particles and the oil in emulsion are preferably mixed in an extruder. In particular, the shaping preferably is performed by extrusion. For a high degree of homogeneity it is preferred that the emulsion is combined with the gelled protein relatively near towards the outlet of the extruder and/or that the extruder is operated at a relatively low flow rate (i.e. at a relatively low rotation speed of the screw(s)).

Extrusion is also eminently suited to manufacture a wide range of product shapes (e.g. slices, bars, pillows) and filled products.

After extrusion, the shaped product may be used (sold) directly. There is no need to subject the shaped product to brining. The preferred absence of a brining step is highly beneficial for environmental reasons. The product may be sold and consumed without having been matured, although this is in principle possible.

As a product according to the invention usually has properties that are associated with more mature naturally prepared products (such as higher percentage of extractable fat, higher interconnectivity of the fat globules, and/or more fat globules per string), the invention provides the advantageous possibility to provide a relatively young product with the appearance of a more mature product.

As described above, the provision of the mixture of gelled protein, and oil in water emulsion may be formed in several ways. In particular suitable are the following approaches.

The mixture may be formed by using the exclusion principle wherein a gelled phase in used in combination with an emulsion phase.

In an embodiment, the gelled phase is obtained from a meltable gel by heating (first part of extruder) followed by cooling (re-gelling) and subsequent addition of the fat emulsion in the part of an extruder where re-gelling takes place. Cooling rate, rotation speed, and zone of addition determine the size of the exclusion domains (see Example 1).

In an embodiment, the gelled phase is obtained by the use of cold set gellation. Herein, a pre-gel is prepared (heated and stirred vessel) and fed into an extruder. Following the heating zones of the extruder the sheared pre-gel enters the cooling zone which initiates gel formation. Gelling under shear provides gelled domains that provide the exclusion condition needed to obtain the inhomogeneous fat distribution. In this embodiment, the fat emulsion is added to the extruder at or behind the cooling zone to obtain the exclusion conditions (see Example 2).

It is also possible to add the fat emulsion in the form of a gelled fat emulsion. Addition of the fat emulsion is also possible to divide the fat emulsion over the pre-gel mixture and the gelled fat emulsion (see Example 3).

Addition of a fat emulsion containing pre-gel mixture to a gelled fat emulsion is also possible.

The forming of the mixture may further be accomplished by feeding an extruder with a mixture containing both the pre-gel mixture and the fat emulsion (optionally in gelled form).

When use is made of an extruder in a method of the invention, the first part of the extruder is usually heated, followed by a cooling zone, which is also the zone of addition.

Further principles for providing the gelling phase are:

* reversible gelling. (Melting of an exiting gel by heating followed by gelling as a function of cooling).
* cold set gelling (gelling by heating followed by cooling).
* gelling in the presence of $Ca^{++}$
* enzymatic gelling (*e.g.* using transglutaminase, rennet)
* gelling by acidification

As a possible alternative for the exclusion principle a phase separation approach can be applied. In the phase separation approach the incompatibility of a protein phase, a hydrocolloid phase, or a mixture of both, with a fat phase under conditions of heating and an applied shear is used to create the spatial inhomogeneities of the fat and protein phase providing the above described engineered structures. In this approach gel and emulsion are formed essentially simultaneously.

The invention will now be illustrated by the following examples.

Example 1

About 100 kg of a fat free casein gel was made by mixing 67.8 kg of frozen standard fat free rennet curd (having a moisture content of about 63 wt %) with 24.2 kg of Sodium Caseinate and 1 kg of polyphosphate (Joha C; supplier: Joha) mixture. This mixture was melted by heating with, life steam (direct steam injection). to about 96 °C under vigorous agitation, during which about 7 kg of steam condensed and was incorporated as water in the mixture. The resulting molten fat free casein gel was left to cool to about 4 °C over night. Next the casein gel was grated to chips of about 5x2x1 mm.

The grated fat free casein gel was continuously fed to a co-rotating twin screw extruder, at ambient temperature by means of a feed hopper. The feed rate of the casein gel was set at 15 kg/hr.

The extruder, with a length over diameter ratio of L/D=36 and a diameter of 32 mm, consisted of 9 zones with individual cooling and heating facilities. The set point temperatures for each of the zones were as follows zone 1:: 20, zone 2: 50, zone 3: 60, zone 4: 100, zone 5: 100, zone 6: 30, zone 7: 25, zone 8: 20, zone 9: 20 °C. The extruder screw rotation speed was set at 100 rpm.

About 40 kg of cream was separated from raw milk by centrifugation. The cream had a fat content of 35 wt %. The cream was fed to the extruder by means of a positive displacement pump at the end of zone 3. The feed rate was set at 6.5 kg/hr.

The resulting heterogeneous fat/casein product left the extruder through a die with a length of 0.1 m. The experiment was repeated with a die having a length of 1 m.

The product is ready as such. Optionally it may be cut or shaped further. The sensoric properties were evaluated for texture and flavour. The product was appreciated as having the texture and flavour in between a young and a old semi-hard cheese.

Example 2

An aqueous suspension was made of 30 wt% skim milk powder, 20 wt% starch and 3.0 wt% agar, at ambient temperatures. This mixture had a total solids content of 53 wt%. It was continuously fed at ambient temperature to a co-rotating twin screw extruder at a feed rate of 15 kg/hr.

The extruder, having a length over diameter ratio of L/D=36 and a diameter of 36 mm, consisted of 9 zones with individual cooling and heating facilities. The set point temperatures for each of the zones were as follows: 60, 100, 120, 120, 90, 40, 20, 10, 10 °C. Temperature measurements in the barrel wall of the extruder indicated deviations to these set point temperatures of up to 3 °C.

The extruder screw rotation speed was set at 150 rpm.

The extruder screw profile contained only positive displacement screw elements. The elements were arranged in 2 sets in series with a pitch decreasing from 1 D to ¼ D to assure sufficient filling of the extruder.

Cream with a fat content of about 35wt. % was added at a flow rate of 2.5 kg/hr in the zone where the mixture was cooled to about 90 °C.

The heterogeneous mix was further cooled to temperatures between 10 and 20 °C after which the mix left the extruder through a die with a length of 0.50 m and a diameter of 0.010 m.

Example 3

An aqueous suspension comprising 18 wt% skim milk powder, 4.5 wt% starch, 9.0 wt % sodium caseinate, 0.9 wt % gellan and 23 wt% cream containing 43 % fat was made at ambient temperature. This mixture, having a total solids content of 55 wt%, was continuously fed at ambient temperature to a co-rotating twin screw extruder at a feed rate of 11 kg/hr.

The extruder, having a length over diameter ratio of 36 and a diameter of 36 mm, consisted of 9 zones with individual cooling and heating facilities. The set point temperatures for each of the zones were as follows: 30, 100, 100, 95, 60, 50, 40, 20, 10 °C. Temperature measurements in the barrel wall of the extruder indicated deviations to these set point temperatures of up to 3 °C.

The extruder screw rotation speed was set at 100 rpm.

The extruder screw profile contained only positive displacement screw elements. The elements were arranged in 2 sets in series with a pitch decreasing from 1 D to % D to assure sufficient filling of the extruder. In the fifth zone, half way in the extruder, cheese cubes were added of about 5 mm is size. The cheese, a Gouda foil cheese 4 weeks of age, was added at a flow rate of 9.6 kg/hr.

Example 4 product characterisation details

*CSLM*

Cheese samples were stained for 30 minutes with fluoresceinisothiocyanate and nile red (0.1%/0.01%) in polyethyleneglycol, glycerol and water (50%/45%/5%).

Images were made with a Leica inverted Confocal Scanning Laser Microscope (TCS SP2, DM IRE2) with a 63x water objective, zoom 1. Image size: 1024 x 1024 pixels, scansize 238.1 $\mu$m x 238.1 $\mu$m.

*Image analysis*

The images were analysed using the image analysis program Fovea Pro and PhotoShop. Methods were developped to determine the intercept length, and the connectivity of the fat globules. The intercept length method measures the size distribution of the spaces between the fat globules.

The connectivity of the fat globules is determined with the disector method. In this method the end points of chains of fat globules are determined in a 3D stack of images. The connectivity can be calculated from this number of endpoints and the number of fat globules, present in the milk of which the cheese is made.

*Sensory evaluation*

The sensory performance of several 20+ and 30+ products of the invention and several known cheeses having the same fat content were compared with several 48+ cheeses.

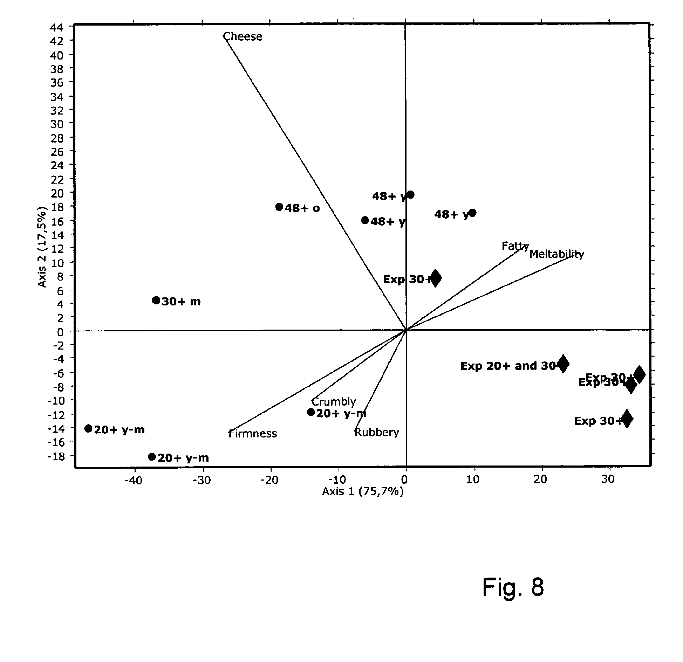

Figure 8 shows a PCA plot, wherein the products appear as points (• for prior art products, ♦ for products of the invention, y, m and o in the prior art products referring to "young", "mature" and "old", respectively. The products of the invention were tested without being aged).

The attributes (product properties: "cheese oral texture", "fatty oral texture", "meltability", "firmness", "crumbliness", "rubberiness") appear as vectors passing through the origin. A vector only gives a direction and has no beginning or ending. One can see how high a product scores on an attribute by drawing a line from the product perpendicular to the vector of that attribute and looking at the distance between the intersection and the origin (Lawless, H.T. & H. Heymann (1999), Sensory Evaluation of Food - Principles and Practices, Aspen Publishers, Inc., Maryland, USA.).

The 20+ cheeses give a crumbly, rubbery and firm oral texture when eaten and do not score particularly high on a typical cheese oral texture. However, especially young 48+ cheeses score higher on the latter and are less crumbly, rubbery and firm when consumed. By contrast, these give a fattier oral texture and melt (solve) better in the mouth. The products of the invention, have similar scores as the 48+ cheeses on fatty perception and meltability. These may be slightly more rubbery and they have a less typical cheesy oral texture.

## Claims

1.   Method for preparing a soft-solid food product - in particular a soft-solid dairy food product, such as a cheese product or a cheese analogue product - comprising

      - providing a mixture comprising an oil in water emulsion and a gel, said gel comprising a protein;
      - fragmenting the gel;
      - regenerating the gel; and
      - shaping a product from the mixture, wherein the product comprises a gel phase comprising the protein, said gel phase having a relatively low fat content, and inhomogeneously distributed outside the gel phase a plurality of fat globules formed from the oil in water emulsion, said globules forming a phase having a relatively high fat content.

2.   Method according to claim 1, wherein the gel is subjected to fragmenting before or as part of mixing the gelled protein with the oil in water emulsion.

3.   Method according to claim 1 or 2, wherein the fragmenting involves subjecting the gelled protein to grating or shearing.

4.   Method according to any one of the preceding claims, wherein the fragmenting of the gel takes place at a temperature below the gelling temperature and the regeneration of the gel is allowed to take place above the gelling temperature.

5.   Method according to any one of the preceding claims, wherein the mixture is extruded.

6.   Method according to any one of the preceding claims, wherein the protein is a dairy protein, in particular a dairy protein selected from caseins, including caseinates, and whey proteins.

7.   Method according to any one of the preceding claims, wherein the oil in water emulsion comprises a protein.

8.   Method according to any one of the preceding claims, wherein the oil in water emulsion is a dairy cream, optionally comprising additional ingredients.

9.   Method according to any one of the preceding claims, wherein the ratio of the gel to oil in water emulsion is chosen such that the fat content in the food product is in the range of 0.5 to 60 wt.% based upon dry weight.

10.  Method according to any one of the preceding claims, wherein the product is a cheese product or a cheese analogue product.

11.  Soft-solid food product - in particular a soft-solid dairy food product, such as a cheese product or cheese analogue product - obtainable by a method according to any one of the preceding claims.

12. Soft-solid food product - in particular a soft-solid dairy food product, such as a cheese product or cheese analogue product - according to claim 11, comprising a gel phase comprising a protein, and inhomogeneously distributed outside the gel phase a fat phase formed by a plurality of fat globules, wherein the fat globules are spatially inhomogeneously distributed, as determinable by determining the intercept length profile of the fat phase.

13. Soft-solid food product, according to claim 12 wherein compared to a homogenous soft-solid food product of the same chemical composition, the number of relatively small intercept lengths is increased, the number of medium sized intercept lengths is decreased, and the number of relatively large intercept lengths is increased.

14. Food product according to claim 13 wherein the relatively small intercept lengths have a value of 10 $\mu$m or less and/or the relatively large intercept lengths a value of at least 30 $\mu$m.

15. Soft-solid food product - in particular a soft-solid dairy food product, such as a cheese product or cheese analogue product - according to any one of the claims 11 -14, comprising a gel phase, said gel comprising a protein and fat globules distributed outside the gel, wherein the relationship between the total fat content of the product (TL) and the fraction of fat extractable by a modified Weibull method (EL), which is modified in that protein degradation is omitted, can be described by the following function:

$$EL> 48+45*TANH(0.5*(TL-22.5))$$

16. Soft-solid food product - in particular a soft-solid dairy food product, such as a cheese product or cheese analogue product - according to any one of the claims 11-14, comprising a gel comprising a protein, said gel having a relatively low fat content, and fat globules distributed outside the gel, wherein the relationship between the mean number of fat globules per string of the product (LGS) and the fraction of fat extractable by a modified Weibull method (EL), modified by omitting protein degradation, can be described by the following function:

$$LGS>0.0887*EL+4.643$$

**Patentansprüche**

1. Verfahren zur Herstellung eines weich-festen Nahrungsmittelprodukts - insbesondere eines weich-festen Milchnahrungsmittelprodukts, wie beispielsweise ein Käseprodukt oder ein Analogkäseprodukt - umfassend:

   - die Bereitstellung eines Gemisches, enthaltend eine Öl-in-Wasser-Emulsion und ein Gel, wobei das Gel ein Protein enthält;
   - die Fragmentierung des Gels;
   - die Regenerierung des Gels; und
   - das Formen eines Produkts aus dem Gemisch, wobei das Produkt eine Gelphase, umfassend ein Protein, umfasst, wobei die Gelphase einen relativ geringen Fettanteil hat, und umfassend inhomogen außerhalb der Gelphase verteilt mehrere von der Öl-in-Wasser-Emulsion gebildete Fettkügelchen, wobei die Kügelchen eine Phase mit einem relativ hohen Fettanteil bilden.

2. Verfahren nach Anspruch 1, wobei das Gel der Fragmentierung unterzogen wird, vor oder als Teil des Mischens des gelierten Proteins mit der Ol-in-Wasser-Emulsion.

3. Verfahren nach Anspruch 1 oder 2, wobei die Fragmentierung beinhaltet, dass das gelierte Protein einem Schaben oder Scheren unterzogen wird.

4. Verfahren nach einem der vorhergehenden Ansprüche, wobei die Fragmentierung des Gels bei einer Temperatur unterhalb der Geliertemperatur stattfindet, und wobei die Regenerierung des Gels über der Geliertemperatur stattfinden darf.

5. Verfahren nach einem der vorhergehenden Ansprüche, wobei das Gemisch extrudiert wird.

**6.** Verfahren nach einem der vorhergehenden Ansprüche, wobei das Protein ein Milchprotein ist, insbesondere ein Milchprotein ausgewählt aus Caseinen, einschließlich Caseinaten, und Molkeproteinen.

**7.** Verfahren nach einem der vorhergehenden Ansprüche, wobei die Öl-in-Wasser-Emulsion ein Protein enthält.

**8.** Verfahren nach einem der vorhergehenden Ansprüche, wobei die Öl-in-Wasser-Emulsion eine Sahne ist, optional enthaltend zusätzliche Zutaten.

**9.** Verfahren nach einem der vorhergehenden Ansprüche, wobei das Verhältnis von Gel zu der Öl-in-Wasser-Emulsion so gewählt ist, dass der Fettanteil in dem Nahrungsmittelprodukt im Bereich von 0,5 bis 60 Gew.-% basierend auf dem Trockengewicht ist.

**10.** Verfahren nach einem der vorhergehenden Ansprüche, wobei das Produkt ein Käseprodukt oder ein Analogkäseprodukt ist.

**11.** Weich-festes Nahrungsmittelprodukt - insbesondere ein weich-festes Milchnahrungsmittelprodukt wie ein Käseprodukt oder Analogkäseprodukt - erhältlich durch ein Verfahren nach einem der vorhergehenden Ansprüche.

**12.** Weich-festes Nahrungsmittelprodukt - insbesondere ein weich-festes Milchnahrungsmittelprodukt wie ein Käseprodukt oder ein Analogkäseprodukt - nach Anspruch 11, umfassend eine Gelphase, die ein Protein umfasst, und, inhomogen außerhalb der Gelphase verteilt, eine Fettphase, gebildet von mehreren Fettkügelchen, wobei die Fettkügelchen räumlich inhomogen verteilt sind, wie bestimmbar durch Bestimmung des Abschnitts-Längenprofils der Fettphase.

**13.** Weich-festes Nahrungsmittelprodukt nach Anspruch 12, wobei, wenn verglichen mit einem homogenen weich-festen Nahrungsmittelprodukt mit derselben chemischen Zusammensetzung, die Anzahl relativ kleiner Abschnitts-Längen erhöht ist, die Anzahl mittelgroßer Abschnitts-Längen erniedrigt ist, und die Anzahl relativ großer Abschnitts-Längen erhöht ist.

**14.** Nahrungsmittelprodukt nach Anspruch 13, wobei die relativ kleinen Abschnitts-Längen einen Wert von 10 $\mu$m oder weniger haben, und/oder die relativ großen Abschnitts-Längen einen Wert von mindestens 30 $\mu$m haben.

**15.** Weich-festes Nahrungsmittelprodukt - insbesondere ein weich-festes Milchnahrungsmittelprodukt wie ein Käseprodukt oder ein Analogkäseprodukt - nach einem der Ansprüche 11-14, umfassend eine Gelphase, das Gel umfassend ein Protein und außerhalb des Gels verteilte Fettkügelchen, wobei das Verhältnis zwischen dem gesamten Fettanteil des Produkts (TL) und der Fraktion von Fett, die nach dem modifizierten Weibull-Verfahren extrahierbar ist (EL), wobei das Verfahren durch Weglassen der Proteindegradation modifiziert wird, durch folgende Funktion beschrieben werden kann:

$$EL > 48 + 45*TANH(0,5*(TL-22,5))$$

**16.** Weich-festes Nahrungsmittelprodukt- insbesondere ein weich-festes Milchnahrungsmittelprodukt wie ein Käseprodukt oder ein Analogkäseprodukt - nach einem der Ansprüche 11-14, umfassend ein Gel, das ein Protein umfasst, wobei das Gel einen relativ geringen Fettanteil hat, und außerhalb des Gels verteilte Fettkügelchen, wobei das Verhältnis zwischen der mittleren Anzahl von Fettkügelchen pro Strang des Produkts (LGS) und der Fraktion von Fett, die durch ein modifiziertes Weibull-Verfahren extrahierbar ist (EL), wobei das Verfahren durch Weglassen der Proteindegradation modifiziert wird, durch folgende Funktion beschrieben werden kann:

$$LGS > 0,0887*EL + 4,643$$

## Revendications

**1.** Procédé de préparation d'un produit alimentaire solide-mou, en particulier un produit alimentaire laitier solide-mou, tel qu'un produit fromager ou un produit analogue au fromage, comprenant

- la fourniture d'un mélange comprenant une émulsion d'huile dans l'eau et un gel, ledit gel comprenant une protéine ;
- la fragmentation du gel ;
- la régénération du gel ; et
- la formation d'un produit à partir du mélange, le produit comprenant une phase de gel comprenant la protéine, ladite phase de gel ayant une teneur en matière grasse relativement faible et, distribués de façon inhomogène à l'extérieur de la phase de gel, une pluralité de globules gras formés à partir de l'émulsion d'huile dans l'eau, lesdits globules formant une phase ayant une teneur en matière grasse relativement élevée.

2. Procédé selon la revendication 1, dans lequel le gel est soumis à une fragmentation avant ou pendant le mélange de la protéine gélifiée avec l'émulsion d'huile dans l'eau.

3. Procédé selon la revendication 1 ou 2, dans lequel la fragmentation met en oeuvre la soumission de la protéine gélifiée à un râpage ou un cisaillement.

4. Procédé selon l'une quelconque des revendications précédentes, dans lequel la fragmentation du gène est effectuée à une température inférieure à la température de gélification et on laisse la régénération du gel se produire au-dessus de la température de gélification.

5. Procédé selon l'une quelconque des revendications précédentes, dans lequel le mélange est extrudé.

6. Procédé selon l'une quelconque des revendications précédentes, dans lequel la protéine est une protéine laitière, en particulier une protéine laitière choisie parmi des caséines, comprenant des caséinates, et des protéines de lactosérum.

7. Procédé selon l'une quelconque des revendications précédentes, dans lequel l'émulsion huile dans l'eau comprend une protéine.

8. Procédé selon l'une quelconque des revendications précédentes, dans lequel l'émulsion d'huile dans l'eau est une crème laitière, comprenant facultativement des ingrédients additionnels.

9. Procédé selon l'une quelconque des revendications précédentes, dans lequel le rapport du gel à l'émulsion d'huile dans l'eau est choisi de sorte que la teneur en matière grasse dans le produit alimentaire soit dans la plage de 0,5 à 60 % en poids sur la base du poids sec.

10. Procédé selon l'une quelconque des revendications précédentes, dans lequel le produit est un produit fromager ou un produit analogue au fromage.

11. Produit alimentaire solide-mou, en particulier un produit alimentaire laitier solide-mou, tel qu'un produit fromager ou un produit analogue au fromage, pouvant être obtenu par un procédé selon l'une quelconque des revendications précédentes.

12. Produit alimentaire solide-mou, en particulier un produit alimentaire laitier solide-mou, tel qu'un produit fromager ou un produit analogue au fromage, selon la revendication 11, comprenant une phase de gel comprenant une protéine, et, distribués de façon inhomogène à l'extérieur de la phase de gel, une phase grasse formée d'une pluralité de globules gras, lesdits globules gras étant distribués de façon spatialement inhomogène, comme cela peut être déterminé par détermination du profil de longueur d'intersection de la phase grasse.

13. Produit alimentaire solide-mou, selon la revendication 12 dans lequel, par rapport à un produit alimentaire solide-mou homogène de la même composition chimique, le nombre de longueurs d'intersection relativement faibles est augmenté, le nombre de longueurs d'intersection de taille moyenne est diminué, et le nombre de longueurs d'intersection relativement élevées est augmenté.

14. Produit alimentaire selon la revendication 13 dans lequel les longueurs d'intersection relativement faibles ont une valeur de 10 $\mu$m ou moins et/ou les longueurs d'intersection relativement élevées une valeur d'au moins 30 $\mu$m.

15. Produit alimentaire solide-mou, en particulier un produit alimentaire laitier solide-mou, tel qu'un produit fromager ou un produit analogue au fromage, selon l'une quelconque des revendications 11 à 14, comprenant une phase de gel, ledit gel comprenant une protéine et des globules gras distribués à l'extérieur du gel, dans lequel la relation entre la teneur en matière grasse totale du produit (TL) et la fraction de matière grasse extractible par un procédé de Weibull modifié (EL), qui est modifié en ce que la dégradation de protéine est omise, peut être décrit par la fonction suivante :

$$EL > 48+45*TANH(0,5*(TL-22,5))$$

16. Produit alimentaire solide-mou, en particulier un produit alimentaire laitier solide-mou, tel qu'un produit fromager ou un produit analogue au fromage, selon l'une quelconque des revendications 11 à 14, comprenant un gel comprenant une protéine, ledit gel ayant une teneur en matière grasse relativement faible, et des globules gras distribués à l'extérieur du gel, dans lequel la relation entre le nombre moyen de globules gras par fil du produit (LGS) et la fraction de matière grasse extractible par un procédé de Weibull modifié (EL), modifié par omission de la dégradation de protéine, peut être décrite par la fonction suivante :

$$LGS>0,0887*EL+4,643$$

Fig. 1

Fig. 2

Fig. 3

Fig. 4

Fig. 5

Fig. 6

Fig. 7

Fig. 8

## REFERENCES CITED IN THE DESCRIPTION

### Patent documents cited in the description

- US 20040018292 A
- US 6495187 B
- EP 1123658 A2
- US 6322841 B
- US 5079024 A
- US 5103773 A

### Non-patent literature cited in the description

- Soft-solids. **P. WALSTRA.** Physical Chemistry of Foods. Marcel Dekker, 2003
- **J.F.C. MEULLENET ; J.GROSS.** Instrumental single and double compression tests to predict sensory texture characteristics of foods. *Journal of Texture Studies,* 1999, vol. 30, 167-180
- IDF Bulletin: Rheological and Fracture properties of cheese. 1991
- **JOHN C RUSS ; ROBERT T. DEHOFF.** Practical Stereology. Kluwer Academic/Plenum Publishers
- **LAWLESS, H.T. ; H. HEYMANN.** Sensory Evaluation of Food - Principles and Practices. Aspen Publishers, Inc, 1999